Europäisches Patentamt

**European Patent Office**

**Office européen des brevets**

(19)

(11) Publication number: **0 218 477**
A2

(12) **EUROPEAN PATENT APPLICATION**

(21) Application number: **86307625.3**

(22) Date of filing: **02.10.86**

(51) Int. Cl.⁴: **H 02 K 1/28** .

(30) Priority: **02.10.85 GB 8524233**
**05.03.86 GB 8605385**

(43) Date of publication of application: **15.04.87**
**Bulletin 87/16**

(84) Designated Contracting States: **DE GB IT**

(71) Applicant: **Johnson Electric Industrial Manufactory Limited, Johnson Building 14-16 Lee Chung Street, Chaiwan (HK)**

(72) Inventor: **Srobl, Georg, 19A South Bay Close, Repulse Bay Hong Kong (CN)**

(74) Representative: **Higgins, Michael Roger et al, MARKS & CLERK 57/60 Lincoln's Inn Fields, London WC2A 3LS (GB)**

(54) **Rotors for A.C. synchronous motors.**

(57) A permanent-magnet rotor for a a.c. synchronous electric motor, comprises at least one pair of diametrically opposed poles mounted on a rotor shaft (21). The or each pair of poles is constituted by two individual pole members (11, 12) and are held in diametrically opposed and preferably non-abutting relationship by one or more non-magnetic, preferably plastics, holding members (28, 29).

EP 0 218 477 A2

0218477

## Rotors for A.C. Synchronous Motors

This invention relates to permanent-magnet rotors for a.c. synchronous electric motors and to an a.c. synchronous motor having such a rotor.

Conventionally rotors of small single-phase a.c. synchronous motors have an annular permanent magnet, with two diametrically, opposed poles, mounted on a rotor shaft. To provide such motors with reasonable torque the grain structure of the magnet should be orientated in a direction which corresponds to the direction of magnetization of the rotor. The stress pattern set up in the magnet by orientating the grain structure in this way is assymmetrical. In a 2-pole motor the grain structure will vary from being radially aligned to being tangentially aligned over a quarter of rotor's circumference. The assymmetrical stress pattern can lead to fracturing of the rotor during sintering, as the magnet when at an elevated temperature has a tendency to adopt an elliptical shape. It can also lead to fracturing during assembly or use.

The assymmetrical stress pattern can be avoided by using a non-orientated grain structure in the magnet but such magnets exhibit weaker magnetic fields with the consequence that the motor has a lower torque.

According to the invention there is provided a permanent-magnet rotor for an a.c. synchronous electric motor, comprising at least one pair of diametrically opposed poles mounted on a motor shaft, the or each pair of poles being constituted by two individual pole members, and either a single non-magnetic holding member or a pair of non-magnetic holding members holding the pole members in diametrically opposed relationship to one another, each of said pair of holding members or each of two parts of the single holding member, which two parts lie on opposite sides of an imaginary plane extending through the rotor in a direction transverse to the axis thereof and midway between the ends thereof, having first, second and third integral portions, the first portions being inner portions which are mounted on the rotor shaft and which extend axially from respective ends of the rotor towards one another, the second portions being end portions which are at opposite ends of the rotor, respectively, and which extend radially to locate the pole members axially relative to the shaft, and the third portions being peripheral portions which support the pole members against radially outward movement relative to the shaft.

Preferred and/or optional features of the invention are set forth in claims 2 to 13, inclusive.

- 3 -

0218477

With such an arrangement the pole members can expand with little likelihood of fracturing.

The invention will now be more particularly described with reference to the accompanying drawings, wherein

Figure 1 is a side view, partly in longitudinal section, of a first embodiment of a rotor according to the present invention,

Figure 2 is an end view of the rotor shown in Figure 1,

Figure 3 is an exploded view illustrating the segmental pole members and shaft of the rotor of Figures 1 and 2,

Figure 4 is a side view, partly in longitudinal section, of a second embodiment of a rotor according to the invention,

Figure 5 is an end view of the rotor shown in Figure 4,

Figure 6 is an exploded view illustrating the segmental pole members and shaft of the rotor of Figures 4 and 5,

Figure 7 is a side view of a third embodiment of a rotor according to the invention,

Figure 8 is an exploded view of the motor of Figure 7,

Figure 9 is a side view of a fourth embodiment of a rotor according to the invention,

Figure 10 is an exploded view of the rotor of Figure 9,

Figure 11 is a side view of a fifth embodiment of a rotor according to the invention,

Figure 12 is an exploded view of the rotor of Figure 11,

Figure 13 is an exploded view of a sixth embodiment of a rotor according to the invention, and

Figure 14 is an enlarged view of part of one of the end caps of the rotor of Figure 13.

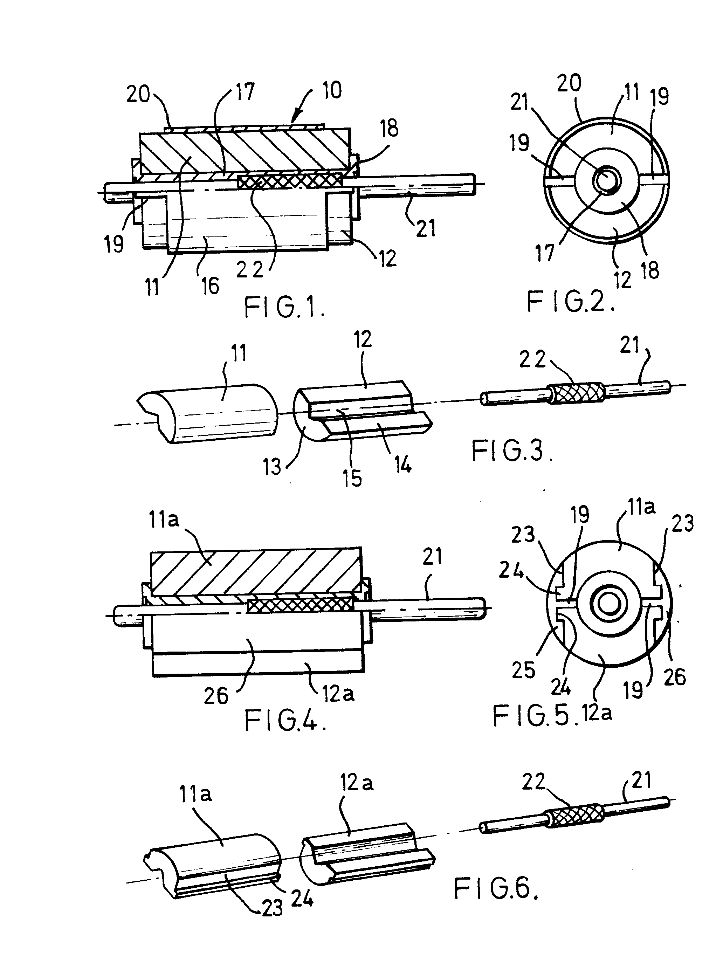

Referring firstly to Figures 1, 2 and 3, the rotor 10 shown therein comprises two segmental pole members 11 and 12 each made by compaction under the influence of a strong electromagnetic field to align the constituent grains of the segment such that they are parallel to a median radius passing through the segment. The segments are then magnetized. Each segmental pole member 11, 12 has a part-cylindrical surface 13 and a planar surface 14 in which there is a longitudinally extending groove 15.

The pole members 11 and 12 are held in diametrically opposed relationship by a plastics holding member 16. The holding member 16 is formed by insert moulding and comprises a central hollow core 17, with an annular radially outwardly extending flange 18 at each end, two radial arms 19, and an outer sleeve portion 20 which surrounds the pole members 11 and 12 and which is joined to the core 17 by the arms 19. The arms 19 extend over the entire length of the pole members 11 and 12 and therefore separate the pole members 11 and 12 from one another. A rotor shaft 21 having a knurled central portion 22 extends through the core 17. This shaft 21 can be pushed into the core 17 to form an inference fit therewith or the core 17 can be moulded around the shaft 21.

Referring to Figures 4, 5 and 6 the rotor shown therein differs from that shown in Figures 1, 2 and 3 firstly in that pole members 11a and 12a have two flats 23 each having an elongate radial projection 24 and secondly in that instead of the sleeve portion 20, the holding member has two circumferentially extending parts 25, 26 joined to respective arms 19. The outer surface of each part 25, 26 has a radius of curvature equal to that of the outer surface of each pole member 11a and 12a and is continuous therewith in a circumferential direction. Each part 25, 26 also has an elongate groove 27 on each side of the respective arm 19. These grooves 27 receive the projections 24 of the pole members 11a and 12a to prevent radial separation of the pole members 11a and 12a.

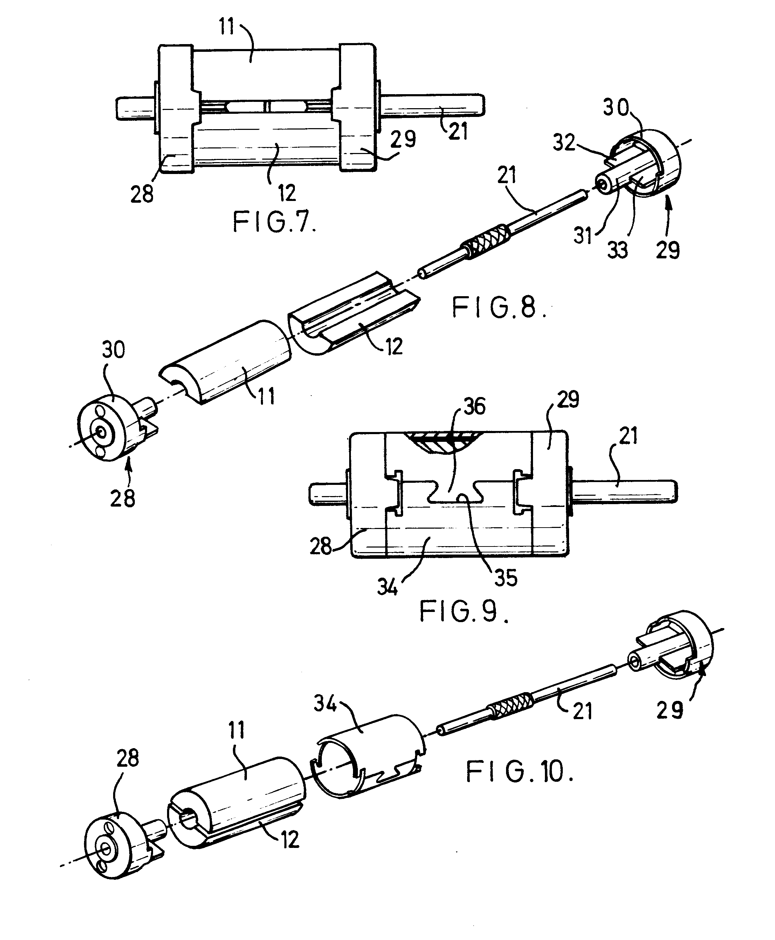

Referring now to Figures 7 and 8, the two pole members 11 and 12 and rotor shaft 21 are identical to those shown in Figures 1, 2 and 3. However in this embodiment the pole members are held by two holding members in the form of end caps 28 and 29. Each end cap 28, 29 has a cylindrical skirt 30 which fits over one end of the two pole members 11 and 12, a central tubular boss 31 which receives the shaft 21 and two diametrically aligned radial partition walls 32 and 33. The bosses 31 have a greater longitudinal extent than the skirts 30 so that when the end caps are fitted over the opposite ends, respectively, of the pole members 11 and 12 the free ends of the two bosses 31 abut whilst the free edges of the skirts 30 are spaced apart from one another. The partition walls 32 and 33 separate the pole members 11 and 12 from one another and the shaft 21 is an interference fit in the bosses 31.

Referring to Figures 9 and 10, the rotor shown therein differs from that shown in Figures 7 and 8 in that a non-magnetic shroud 34, preferably but not necessarily of metal, is interposed between the free ends of the skirts 30 and surrounds the pole members 11 and 12. The mass of the shroud is selected to provide the required inertia and damping to the rotor thus changing its time constant and thereby enabling the use of a wider range of electromagnetic fields such that under a given load and frequency the motor will start smoothly without danger of oscillation in resonance with the applied frequency. Otherwise the motor may be slow to start or may not start at all.

As shown, this shroud is conveniently formed from a blank having a dove-tailed groove 35 at one edge and a complementary shaped projection 36 at an opposite edge to ensure that contact is maintained between these two edges. The groove 35 and projection 36 could be, however, of any other appropriate shape and indeed two or more such grooves and projections could be provided.

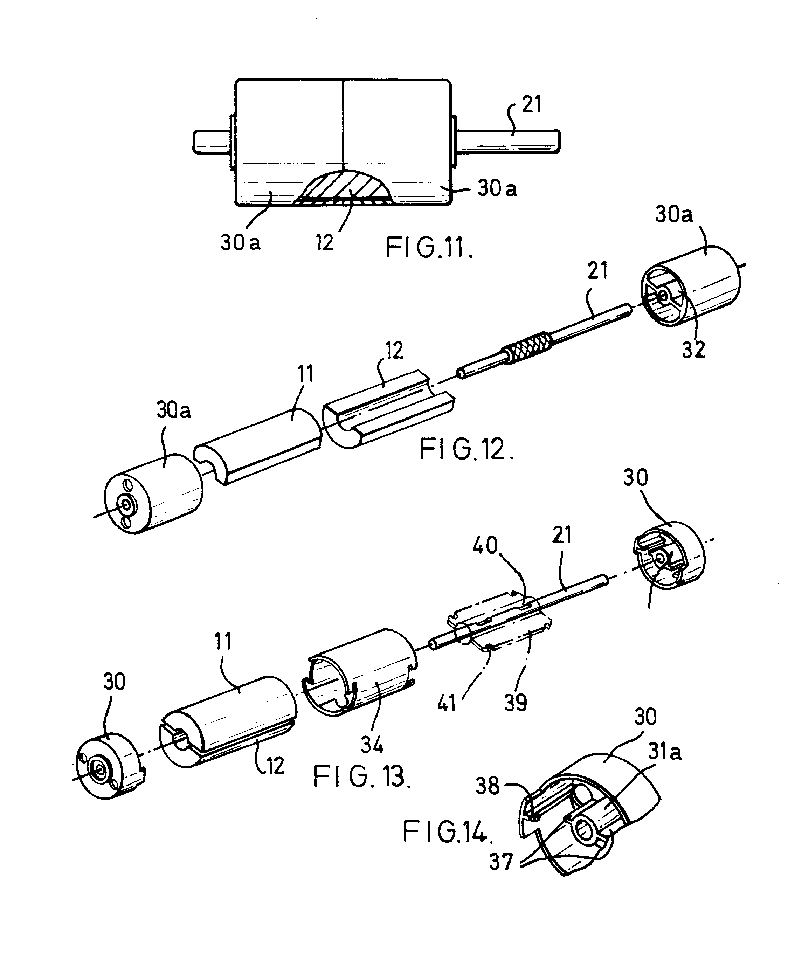

Referring to Figures 11 and 12, the rotor shown therein differs from that shown in Figures 7 and 8 in that the skirt 30a and boss 31 of each end cap are of equal length and the skirts of the two end caps meet to enclose the pole members 11 and 12 entirely.

Referring to Figures 13 and 14, the rotor shown therein differs from that shown in Figures 9 and 10 in that the central tubular boss 31a of each end cap is of substantially the same longitudinal extent as the skirt 30, in that the partition walls are replaced by two diametrically aligned wing portions 37 extending radially outwards from the central tubular boss 31a, and in that the end cap has two integral claws 38 (best seen in Figure 14) which are radially aligned with respective wing portions 37. The rotor also has a fillet 39 of any appropriate non-magnetic material fixed to the shaft 21. The fillet 39 could be insert moulded on the shaft and keyed thereto by providing notches 40 in the shaft or it could be an interference fit on the shaft which may for that purpose instead of notches 40 have a knurled or otherwise roughened central portion in the manner shown in previously described embodiments. The fillet 39 has four notches 41 and when assembled the claws 38 on the end caps engage in respective notches 41 to prevent axial separation of the end caps. The wing portions 37 are also aligned with the general plane of the fillet 39 so that relative angular displacement of the various component parts of the rotor is prevented. In a slight modification of this embodiment the skirts of the end caps could be extended in order to meet at the outer periphery of the rotor to enclose the pole members in similar manner to that described and shown in relation to the embodiment of Figures 11 and 12.

A non-magnetic shroud similar to that described with reference to the embodiment of Figures 9 and 10 could be provided also on the rotor of anyone of the other embodiments described above and indeed is shown also in the embodiment of Figures 13 and 14.

The rotor could have more than one pair of poles and each pair of poles will be constituted by two individual pole members.

Moreover, whilst the holding members have to be of non-magnetic material they need not necessarily be of plastics material, and for example could be die cast in aluminium.

Claims

1. A permanent-magnet rotor for an a.c. synchronous electric motor, comprising at least one pair of diametrically opposed poles (11, 12) mounted on a rotor shaft (21), the or each pair of poles (11, 12) being constituted by two individual pole members (11, 12), and either a single non-magnetic holding member (16) or a pair of non-magnetic holding members (28, 29); holding the pole members (11, 12) in diametrically opposed relationship to one another, each of said pair of holding members (28, 29) or each of two parts of the single holding member (16), which two parts lie on opposite sides of an imaginary plane extending through the rotor (21) in a direction transverse to the axis thereof and midway between the ends thereof, having first, second and third integral portions, the first portions being inner portions (17; 31) which are mounted on the rotor shaft and which extend axially from respective ends of the rotor towards one another, the second portions being end portions (18) which are at opposite ends of the rotor, respectively, and which extend radially to locate the pole members (11, 12) axially relative to the shaft (21), and the third portions being peripheral portions (20; 25, 26; 30) which support the pole members (11, 12) against radially outward movement relative to the shaft (21).

2. The rotor of Claim 1, wherein there is a single holding member (16), the first portions are constituted by a central holloiw core (17) receiving the rotor shaft and radial arms (19) extending from the core (17) to the periphery of the rotor (10) and separating the pole members (11, 12) of the rotor (10) from one another, and the third portions are constituted by circumferentially extending parts (30; 25, 26) joined to the radially outermost end of each radial arm (19) and extending at least part way round the circumference of the rotor (10).

3. The rotor of Claim 2, wherein the circumferentially extending parts are joined to one another (20) to surround the pole members (11, 12).

4. The rotor of Claim 2, wherein the outer surface of each circumferentially extending part (25, 26) has a radius of curvature equal to that of the outer surface of each pole member (11, 12) and wherein the pole members (11, 12) have projections (24) along two opposite longitudinal edges which projections projections (24) are received in coresponding grooves (27) of the circumferentially extending parts.

5.   The rotor of anyone of Claims 2-4, wherein the central core of the holding member (16) has a radial flange (18) at each end constituting said second portions.

6.   The rotor of Claim 1, wherein there are two holding members (28, 29) in the form of end caps having cylindrical skirts (30; 30a) constituting said third portions, which fit over opposite ends, respectively, of the pole members (11, 12), and central tubular bosses (31) constituting said first portions and receiving the rotor shaft (21).

7.   The rotor of Claim 6, wherein a diametrically extending fillet (39) is mounted on the rotor shaft (21) and wherein the fillet (39) and end caps (30) have interengagable means (38, 41) for preventing axial separation of the two end caps (30).

8.   The rotor of Claim 7, wherein the interengageable means comprises notches (41) in the fillet (39) and claws (38) on the end caps (30).

9. The rotor of anyone of Claims 6-8, wherein the skirts (30a) of the end caps (28, 29) meet at the outer periphery of the rotor (10) to enclose the pole members (11, 12).

10. The rotor of anyone of the preceding claims, wherein a non-magnetic shroud (34) is provided on the rotor (10) to surround the pole members (11, 12).

11. The rotor of Claim 6, wherein the skirts (30) of the two end caps (28, 29) are spaced from one another and wherein a non-magnetic shroud (34) is interposed between the skirts (30) of the two end caps (28, 29) and surrounds the pole members (11, 12).

12. The rotor of anyone of the preceding claims, wherein the holding member or members (16, 28, 29) hold the pole members (11, 12) in non-abutting relationship.

13. An a.c. synchronous electric motor having a rotor (10) according to anyone of the preceeding claims.

FIG.1.

FIG.2.

FIG.3.

FIG.4.

FIG.5.

FIG.6.

0218477

1/3

FIG.7.

FIG.8.

FIG.9.

FIG.10.

FIG.11.

FIG.12.

FIG.13.

FIG.14.